# EUROPÄISCHE PATENTSCHRIFT

(11) **EP 0 594 801 B1**
(45) Veröffentlichungstag und Bekanntmachung des Hinweises auf die Patenterteilung: **13.12.1995**
(21) Anmeldenummer: 93906558.7
(22) Anmeldetag: 19.03.1993
(51) Int. Cl.: F24F 6/04, B05B 17/08, A01G 31/02

(54) **BAUEINHEIT ZUR KLIMATISIERUNG VON RÄUMEN**
STRUCTURAL UNIT FOR AIR CONDITIONING PREMISES
ENSEMBLE DESTINE A LA CLIMATISATION D'ESPACES

(30) Priorität: 25.03.1992 DE 4209570
(43) Veröffentlichungstag der Anmeldung: 04.05.1994
(73) Patentinhaber: GRUBER, Heinz, D-38723 Seesen (DE)
(72) Erfinder: GRUBER, Heinz, D-38723 Seesen (DE)
(74) Vertreter: Sobisch, Peter, Dipl.-Ing.
(86) Internationale Anmeldenummer: EP9300662
(87) Internationale Veröffentlichungsnummer: WO9319331

(56) Entgegenhaltungen:
- DE-A- 3 413 198
- DE-U- 8 712 051
- DE-U- 9 100 899

## Beschreibung

Die Erfindung bezieht sich auf eine Baueinheit entsprechend dem Oberbegriff des Anspruchs 1.

Die Pflege und Erhaltung von Zierpflanzen insbesondere in ausgedehnten, gewerblich genutzten Räumen wie z.B. Großraumbüros, jedoch auch kompletten, in vergleichbarer Weise genutzten Gebäuden kann mit einem beträchtlichen Arbeitsaufwand verbunden sein. Dies beginnt mit der Wahl oder Einrichtung eines passenden Aufstellungsortes, der z.B. durch ausreichende Lichtverhältnisse gekennzeichnet sein muß. Dies betrifft ferner die artspezifische Versorgung der Pflanzen mit Wasser und Nährsalzen.

Pflanzen erfüllen im Innenbereich einen dekorativen Zweck - sie können jedoch auch entsprechend ihrer Größe und Art aufgrund ihres Stoffwechsels einen wesentlichen Beitrag zur Raumklimatisierung leisten, unter anderem zur Raumluftbefeuchtung und damit zur Schadstoffbindung.

Bekanntlich muß insbesondere die Einstellung einer angemessenen, natürlichen Lebensbedingungen nachgebildeten Raumluftbefeuchtung im allgemeinen mit einem großen apparativen Aufwand erkauft werden.

Aus der DE 36 34 921 ist ein Zierbrunnen bekannt, der als Luftbefeuchter grundsätzlich geeignet ist. Dieser besteht aus einem oberen Überlaufgefäß und einem unteren Sammelgefäß, welche über eine offene Strömungsstrecke miteinander in Verbindung stehen, wobei über eine Pumpe und ein Steigrohr, welches das Sammelgefäß mit dem Überlaufgefäß verbindet, ein geschlossener Wasserkreislauf gebildet wird. Das Überlaufgefäß und das Aufnahmegefäß sind in einen Stützkörper eingebunden.

Aus dem DE-85 31 595.8 U1 ist eine Blumenkrippe bekannt, welche als Baueinheit mit einem Springbrunnen zusammengefaßt ist. Der Springbrunnen ist innerhalb eines kreiszylindrischen Gefäßes untergebracht, wobei ein, dieses Gefäß außenseitig umgebendes, zu diesem somit koaxiales ringzylinderartiges Gefäß ein Aufnahmebehältnis für Blumen bildet. Der Springbrunnen einerseits und das Blumenaufnahmegefäß andererseits sind als flüssigkeitsdichte Gefäße ausgebildet, die nebeneinander existieren.

Aus dem DE GM 87 12 051.8 ist ein Quellsteinbrunnen mit einem integriertem Bio-Filter bekannt, welcher aus einem aufrecht angeordneten, steinartigen Stützkörper besteht, innerhalb welchem sich ein Steigrohr erstreckt. Das Steigrohr bildet einen Teil eines Wasserkreislaufs, der am oberen Ende des Stützkörpers beginnt, in der Form eines Flüssigkeitsfilmes, der an dem Stein herunterrinnt fortgesetzt ist, über ein Bio-Filter zurück zu einem Aufnahmeraum unterhalb des Steines führt und von hier aus über eine Pumpe zurück zu dem Steigrohr führt. Das Bio-Filter wird durch eine Schüttung aus Lava-Granulat gebildet und verhindert eine Veralgung bzw. Vermoosung des Stützkörpers, der im übrigen derart bemessen ist, daß Strömungsgeräusche weitestgehend vermieden werden.

Auch die Granulatschüttung trägt zur Vermeidung von Strömungsgeräuschen bei. Die Wirkung dieses Quellsteinbrunnens auf das Raumklima entspricht im wesentlichen derjenigen des Zierbrunnens entsprechend der DE 36 34 921 A1.

Schließlich ist aus der US-PS 1 549 204 ein weiterer Springbrunnen bekannt, der aus zwei, koaxial ineinander angeordneten Gefäßen besteht, wobei das innere einen Springbrunnen bildet und wobei das äußere ringartige Gefäß ein Aufnahmegefäß für Pflanzen bildet. Die Außenwandung des erstgenannten Gefäßes ist hohl ausgebildet und im Bereich ihrer oberen Berandung mit Austrittsdüsen für Wasser versehen, wobei die Achsen dieser Düsen einwärts gerichtet sind. Eine flüssigkeitsleitende Verbindung zwischen dem Springbrunnen und dem Aufnahmegefäß für Pflanzen besteht nicht. Innerhalb des Springbrunnens kann eine elektrisch beleuchtbare Einrichtung angeordnet sein, welche hauptsächlich dekorativen Zwecken dient.

Wesensmerkmal dieses Standes der Technik ist offensichtlich, daß Pflanzgefäße einerseits und Springbrunnen, Zierbrunnen und dergleichen andererseits stets als voneinander getrennte und nur nebeneinander existierende Funktionseinheiten angesehen werden. Nun bedürfen in Pflanzgefäße eingesetzte Pflanzen bekanntlich in Abhängigkeit von der jeweiligen Jahreszeit zumindest einer regelmäßigen Bewässerung, wobei diese Tätigkeit entsprechend der Zahl der Pflanzgefäße beispielsweise bei Großraumbüros oder sonstigen gewerblich genutzten Räumen mit einem beträchtlichen Arbeitsaufwand verbunden sein kann, der entsprechende Raumpflegekosten nach sich zieht.

Es ist die Aufgabe der Erfindung, eine Baueinheit der eingangs bezeichneten Gattung zu entwerfen, die zur Raumklimatisierung geeignet ist und sich darüber hinaus durch einen besonders pflegearmen Betrieb auszeichnet. Gelöst ist diese Aufgabe bei einer solchen Baueinheit durch die Merkmale des Kennzeichnungsteils des Anspruchs 1.

Erfindungswesentlich ist hiernach die Ausbildung einer Kreislaufführung für Wasser zwischen einem Überlaufgefäß und einem Sammelgefäß, wobei in diese Kreislaufführung eine freie Strömungsstrecke eingebunden ist. Die Strömungsstrecke ist derart ausgebildet, daß sich eine möglichst großflächige Verteilung der Flüssigkeit ergibt, welche beispielsweise entlang ebener, jedoch auch räumlicher Körper filmartig geführt ist. Eine Pumpe dient dem Antrieb dieses Flüssigkeitskreislaufes und es wird über die Flüssigkeitsoberfläche ein intensiver thermischer, jedoch auch Stoffaustausch mit der Umgebungsatmosphäre angestrebt. Der Stoffaustausch betrifft in der Hauptsache Verdampfungsvorgänge, über welche ein bedeutender Beitrag zur Raumbefeuchtung geleistet wird. Er betrifft jedoch auch die Fähigkeit der Flüssigkeit zur Schadstoff- und Staubbindung, womit eine reinigende Wirkung auf die Umgebungsluft ausgeübt werden kann. Schließlich geht von der Flüssigkeitsoberfläche auch eine beheizende bzw. kühlende Wirkung auf die Umgebung aus. Die Strömungsstrecke ist in jedem Fall derart ausgebildet, daß deren Verlauf durch keine nennenswerte, Strömungsgeräusche erzeugende Unstetigkeiten gekennzeichnet ist. Die Kreislaufführung ist ferner für einen weitestgehend automatisierten Betrieb ausgelegt, wobei Flüssigkeitsverluste als Folge von Verdampfungsvorgängen im Bereich der Strömungsstrecke erkannt werden und wobei aus diesem Erkennen bestimmte Maßnahmen abgeleitet werden. Im einfachsten Fall kann zur Realisierung der Kreislaufführung ein Überlaufgefäß, dessen Außenseite die Strömungsstrecke bildet, in ein durchmessermäßig größeres, jedoch flacheres Sammelgefäß eingesetzt sein, welches das über die Berandung des Überlaufgefäßes strömende Wasser aufnimmt, wobei über eine Pumpe nebst zugeordneten Rohr- oder Schlauchleitungen der Kreislauf geschlossen wird. Die Kreislaufführung ist mit wenigstens einem zur Aufnahme von Pflanzen bestimmten Aufnahmegefäß funktionell zusammengefaßt, wobei es sich bei der eingesetzten Bepflanzung vorzugsweise um eine solche nach Art einer Hydrokultur handelt. In Betracht kommen jedoch grundsätzlich auch herkömmliche Bepflanzungen. Wesentlich ist, daß das Flüssigkeitsniveau des Aufnahemgefäßes entsprechend dem Flüssigkeitsniveau des Sammelgefäßes steuerbar ist. In Verbindung mit einer automatisiert arbeitenden Steuerung eignet sich die Baueinheit somit insbesondere für einen pflege- und wartungsarmen Betrieb für gewerblich genutzte Räume. Der Beitrag der Pflanzen zur Raumklimatisierung ist an sich bekannt und beruht hauptsächlich auf den Vorgängen der Photosynthese, nämlich der Freisetzung von O₂ und der Einbindung von CO₂ unter dem Einfluß von natürlichem Licht. Die Baueinheit ist unter anderem mit einem Sensor zur Erfassung des Flüssigkeitsniveaus des Aufnahmegefäßes oder des Sammelgefäßes ausgerüstet und auf diese Weise für einen automatisierten Betrieb ausgelegt, nachdem dieser Sensor bzw. Meßgeber mit einer Steuerung in Verbindung steht, welche wiederum mit Stellgliedern in Verbindung steht, die eine Steuerung des Betriebes der Baueinheit ermöglichen. Bei der, im Rahmen dieses Regelkreises zu steuernden Größe handelt es sich um das Flüssigkeitsniveau innerhalb des Aufnahmegefäßes oder des Sammelgefäßes. Zum automatisierten Betrieb der Baueinheit, insbesondere im Fall deren mobiler Ausgestaltung ist auch ein Flüssigkeitsreservoir von Bedeutung, welches in Verbindung mit einer Pumpe sowie der Steuerung ein beliebiges, der Art der eingesetzten Pflanzen, jedoch auch den Flüssigkeitsverlust als Folge von Verdunstungsvorgängen berücksichtigendes Absenken und Anheben des Flüssigkeitsniveaus innerhalb des Sammelgefäßes ermöglicht.

Durch die Merkmale des Anspruchs 2 ist sichergestellt, daß sich im Bodenbereich des Aufnahmegefäßes keinerlei Flüssigkeitsansammlungen bilden können, so daß vorübergehend Phasen relativer Trockenheit einstellbar sind. Durch diese Maßnahme ist sichergestellt, daß ein Absenken des Flüssigkeitsniveaus bis zu einer völligen Entleerung des Aufnahmegefäßes möglich ist.

Die Merkmale des Anspruchs 3 sind auf eine besonders einfach realisierbare Form der Ausbildung der Strömungsstrecke gerichtet. Diese wird hiernach durch einen Strömungskörper gebildet, der allseitig überströmt wird und durch seine, zur Aufstandfläche hin sich kontinuierlich verbreiternde Gestalt einen stetigen Strömungsverlauf sicherstellt, der insbesondere weitestgehend frei von Strömungsgeräuschen ist.

Die Merkmale des Anspruchs 4 sind auf eine einfache Variante zur Realisierung der Strömungsstrecke gerichtet. Diese wird hiernach durch eine schiefe, zum filmartigen Überströmen eingerichtete und angeordnete Fläche gebildet, entlang deren Oberkante sich ein Überlaufgefäß und entlang deren unterer Kante sich ein Sammelgefäß erstreckt. Der Neigungswinkel der schiefen Ebene kann in weiten Grenzen variiert werden - grundsätzlich kommt auch eine vertikale Wandung in Betracht.

Die Merkmale des Anspruchs 6 sind unter anderem auf eine besonders einfache Art der strömungstechnischen Verknüpfung des Aufnahmegefäßes mit dem Sammelgefäß gerichtet. Hiernach kann der Bodenabschnitt des Aufnahmegefäßes nach Art einer Stufe in die seitliche Berandung des Sammelgefäßes übergehen, wobei wiederum der Bodenbereich in Richtung auf das Sammelgefäß hingeneigt angeordnet ist. Die Wandungen des Aufnahmegefäßes sind mit Ausnehmungen versehen, über welche eine, einen Flüssigkeitsdurchtritt ermöglichende Verbindung zu dem Sammelgefäß hergestellt ist. Im Rahmen dieser Ausnehmungen sind entsprechend der Befüllung des Aufnahmegefäßes naturgemäß Siebe, Filter oder dergleichen Elemente angeordnet, welche zwar einen Flüssigkeitsdurchtritt ermöglichen, jedoch ein Austreten des Granulats einer Hydrokultur bzw. von Pflanzerde verhindern.

Die Merkmale der Ansprüche 7 bis 9 sind auf einen rotationssymmetrischen Aufbau der Baueinheit gerichtet, wonach das Überlaufgefäß, das Aufnahmegefäß, das Sammelgefäß und der Strömungskörper koaxial zu einer Vertikalachse angeordnet sind. Dies eröffnet die Möglichkeit eines geometrisch sehr regelmäßigen Aufbaus der gesamten Baueinheit.

Soweit eine gleichförmige, von Strömungsgeräuschen weitgehend freie Überströmung des Strömungskörpers sichergestellt ist, können das Übelaufgefäß, das Sammelgefäß sowie das Aufnahmegefäß jedoch grundsätzlich von beliebiger Gestalt sein.

Die Merkmale der Ansprüche 10 und 11 sind auf Ausführungsvarianten betreffend die genannten Gefäße gerichtet. Diese können als metallische oder aus Kunststoff bestehende Strukturen ausgebildet sein, die in eine auch dekorativ wirkende Masse eingebunden sind, wobei es sich um anorganische Massen, z.B. ein geeignetes Mauerwerk oder auch um organische Massen, z.B. einen geeigneten Kunststoff handeln kann. Alternativ hierzu können die genannten Gefäße auch unmittelbar in diese Massen eingeformt sein, wobei wiederum beliebige Werkstoffe Verwendung finden könnnen. Ferner können die Gefäße auch aus anorganischen Massen hergestellt sein.

Die erfindungsgemäße Baueinheit kann mit Gebäudeteilen in fester Verbindung stehen und z.B. einen integralen Bestandteil einer Bodenkonstruktion bilden. Es ist jedoch gemäß den Merkmalen des Anspruches 12 auch möglich, die gesamte Baueinheit mobil auszubilden, so daß benutzerseitig der Aufstellungsort beliebig wählbar ist. Zu diesem Zweck kann die Baueinheit zumindest in ein Ober- und ein Unterteil zerlegbar sein, womit entsprechend den absoluten Größenverhältnissen deren Transport und Montage vereinfacht werden. Die Zerlegbarkeit der Baueinheit kann jedoch in Abhängigkeit von den absoluten Größen der Teile sowie deren einfache Handhabbarkeit auch weiter ausgebildet sein.

Die Merkmale der Ansprüche 13 und 14 sind auf die Ausgestaltung des Stützkörpers gerichtet. Dieser, als Hohlkörper ausgebildete Stützkörper kann grundsätzlich in vielfältiger Weise realisiert sein. Besonders vorteilhaft ist jedoch eine metallische Stützstruktur, die außenseitig eine, das Strömungsbett bildende, gleichzeitig dekorativ wirkende Beschichtung trägt. Den gleichen grundsätzlichen Aufbau kann auch eine als schiefe Ebene ausgebildete Strömungsstrecke aufweisen.

Die Baueinheit kann entsprechend. den Merkmalen der Ansprüche 17 und 18 mit diversen, einen automatisierten Betrieb ermöglichenden Meßgebern ausgerüstet sein, die mit der Steuerung in Verbindung stehen, welche wiederum mit Stellgliedern in Verbindung steht, die die Steuerung des Betriebes der Baueinheit ermöglichen. Bei den weiteren im Rahmen dieser einzelnen Regelkreise zu steuernden Größen kann es sich beispielsweise um die Temperatur des im Rahmen der Kreislaufführung strömenden Wassers handeln, jedoch auch um den Nährstoffgehalt des Wassers. Zum automatisierten Betrieb der Baueinheit, insbesondere im Fall deren mobiler Ausgestaltung kann auch ein Flüssigkeitsreservoir von Bedeutung sein, welches in Verbindung mit einer Pumpe sowie der Steuerung ein beliebiges, die Art der eingesetzten Pflanzen, jedoch den Flüssigkeitsverlust als Folge von Verdunstungsvorgängen berücksichtigendes Absenken und Anheben des Flüssigkeitsniveaus innerhalb des Sammelgefäßes ermöglicht. Weiterhin kann die Steuerung zur Nachbildung natürlicher Umgebungsbedingungen für die Pflanzen mit einer Lichtquelle und/oder einer Sprüheinrichtung für Wasser in Wirkverbindung stehen. Die Lichtquelle dient während definierter Zeitintervalle der Bereitstellung von Tageslichtverhältnissen, während über eine Sprüheinrichtung der Bildung schädlicher Staubablagerungen entgegengewirkt wird. Sämtliche dieser Maßnahmen tragen zu einem pflegearmen Betrieb der Baueinheit bei. Man erkennt, daß in Verbindung mit diesen Regelkreisen der erforderliche Wartungsaufwand sehr gering gehalten werden kann.

Wesentliche, der Steuerung und Regelung der Kreislaufführung dienende Funktionselemente können gemäß den Merkmalen des Anspruchs 19 in einem Gehäuse zusammengefaßt sein, so daß ein hohes Maß an Flexibilität hinsichtlich der Anordnung der Baueinheit besteht, insbesondere hinsichtlich der räumlichen Unterbringung der einzelnen Komponenten. Diese kann innerhalb des Gehäuses nach Zweckmäßigkeits-, insbesondere unter Wartungsgesichtspunkten erfolgen.

Grundsätzlich können jedoch entsprechend den Merkmalen des Anspruchs 20 wesentliche Teile der Kreislaufführung auch innerhalb des Stützkörpers untergebracht werden. Es ist dies eine Ausführungsform, die hauptsächlich bei mobiler Ausgestaltung der Baueinheit infrage kommt.

Es sind naturgemäß auch weitere Ausgestaltungen der Kreislaufführung für das Wasser möglich. So können in diese beispielsweise neben dem Überlauf- und dem Sammelgefäß auch weitere, der Aufnahme von Fischen dienende Gefäße angeordnet sein, wobei das Wasser in diesen Gefäßen aufgrund der permanenten Strömung in einfacher Weise stets einen hinreichenden Sauerstoffgehalt aufweist. Zur Aufnahme von Fischen können jedoch grundsätzlich auch das Überlaufgefäß und/oder das Sammelgefäß benutzt werden. Schließlich kann in die Kreislaufführung auch ein Terrarium eingebunden sein, welches mit entsprechenden amphibischen Lebewesen besetzt ist und eine dementsprechende Ausgestaltung aufweist. Von besonderem Vorteil ist in diesem Zusammenhang, daß in Verbindung mit den Möglichkeiten zur Temperierung des Wassers, zur Einstellung definierter Lichtverhältnisse und - in Verbindung mit einer Sprüheinrichtung - auch definierter Feuchtigkeistverhältnisse eine sehr weitgehende Nachbildung von für die jeweiligen Lebewesen natürlichen Lebensbedingungen möglich ist. Auf diese Weise ergibt sich für die Baueinheit auch eine Nutzungsmöglichkeit im Rechner von zoologischen Gärten.

Die Erfindung wird im folgenden unter Bezugnahme auf die in den Zeichnungen dargestellten Ausführungsbeispiele näher erläutert werden. Es zeigen:
Fig. 1 eine Prinzipdarstellung eines ersten Ausführungsbeispiels einer erfindungsgemäßen Vorrichtung im Vertikalschnitt;
Fig. 2 eine Darstellung einer Seitenansicht einer erfindungsgemäßen Vorrichtung,
Fig. 3 eine Prinzipdarstellung einer weiteren Ausführungsform einer erfindungsgemäßen Vorrichtung im Vertikalschnitt;
Fig. 4 eine Darstellung einer Variante des oberen Bereichs der Vorrichtung im Vertikalschnitt.

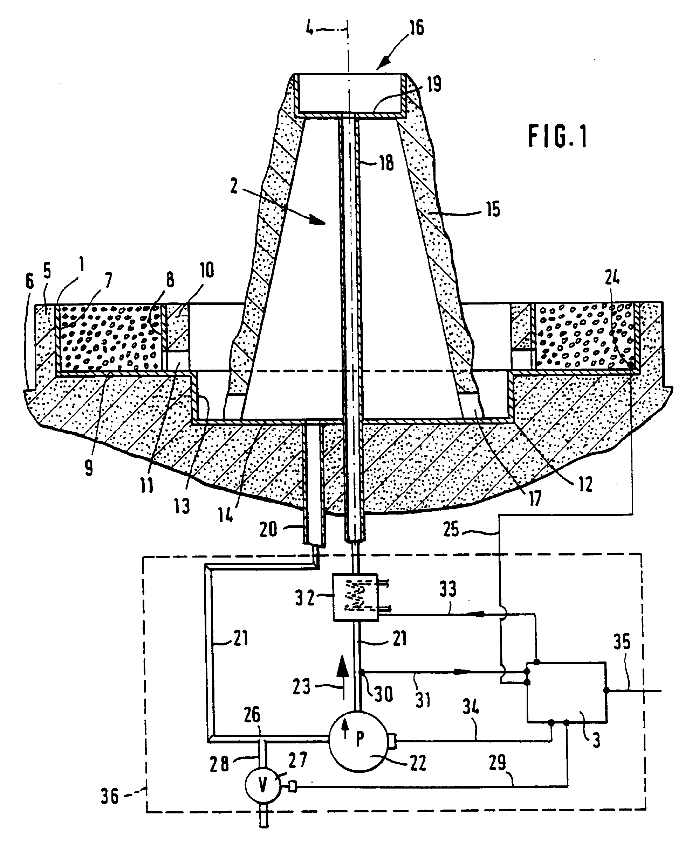

Die in Fig. 1 gezeigte erfindungsgemäße Vorrichtung besteht global aus einem Aufnahmegefäß 1 für eine Hydrokultur, einer Kreislaufführung 2 für Wasser und einer Steuereinrichtung 3 zur Steuerung, Überwachung und Energieversorgung.

Das Aufnahmegefäß 1 ist ringartig ausgebildet und koaxial zu einer Vertikalachse 4 angeordnet. Es besteht in dem gezeigten Ausführungsbeispiel aus einer metallischen Struktur, die außenseitig in ein hauptsächlich architektonischen bzw. dekorativen Zwecken dienendes Mauerwerk 5 eingebunden ist. Die Gesamtvorrichtung ist zur Aufstellung in Räumen, hauptsächlich gewerblich genutzten Räumen wie z.B. Großraumbüros bestimmt und es ist mit 6 das Fußbodenniveau bezeichnet.

Die genannte metallische Struktur des Aufnahmegefäßes 1 besteht aus im wesentlichen vertikal verlaufenden, radial bezüglich der Vertikalachse 4 mit Abstand angeordneten Wandungen 7,8 und einem Bodenabschnitt 9, der sich radial über die innere Wandung 8 hinaus erstreckt und ein in Richtung auf die Vertikalachse 4 hin gerichtetes leichtes gleichmäßiges Gefälle aufweist, welches jedoch zeichnerisch nicht dargestellt ist.

Mit 10 ist ein, die Wandung 8 radial innenseitig verkleidendes, wiederum hauptsächlich dekorativen Zwecken dienendes Mauerwerk bezeichnet.

Die Wandung 8 sowie das Mauerwerk 10 sind mit einer Reihe von - in Umfangsrichtung gleichmäßig verteilten Ausnehmungen 11 versehen, über welche das Aufnahmegefäß 1 mit einem, wiederum zu der Vertikalachse 4 koaxial angeordneten Sammelgefäß 12 in Verbindung steht. Das Sammelgefäß 12 ist seinerseits global zylindrisch ausgebildet und besteht aus einer Wandung 13 sowie einem Bodenabschnitt 14. Der sich radial einwärts über die Wandung 8 des Aufnahmegefäßes 1 hinaus erstreckende Teil des Bodenabschnitts 9 ist unmittelbar an die Wandung 13 angeschlossen, so daß sich der senkrecht zu der Vertikalachse 4 erstreckende eben ausgebildete Bodenabschnitt 14 auf einem im wesentlichen um das Maß der axialen Erstreckung der Wandung 13 niedrigeren Niveau als der Bodenabschnitt 9 befindet. Das Sammelgefäß 12 ist wiederum als metallische Struktur ausgebildet, die mit dem Aufnahmegefäß 1 in vorzugweise unlösbarer Verbindung steht. Es ist das Sammelgefäß 12 im übrigen in den Boden eines Gebäudes eingebunden.

Wiederum koaxial zu der Vertikalachse 4, innerhalb des Sammelgefäßes 12 mit Abstand von dessen Wandungen 13 auf dem Bodenbereich 14 aufstehend befindet sich ein global pyramidenstumpfartig ausgestalteter, sich in Richtung auf sein oberes Ende hin querschnittsmäßig verjüngender, hohl ausgebildeter Stützkörper 15, in dessen oberes Ende ein Überlaufgefäß 16 eingebunden ist.

Der Stützkörper 15 kann seinerseits aus einer beispielsweise metallischen, innenseitig angeordneten Stützstruktur ausgebildet sein, die außenseitig mit einem dekorativ wirkenden Mauerwerk überzogen ist, bei welchem es sich beispielsweise aus einem gefugten Mauerwerk aus vulkanischem, insbesondere porösen Gestein handeln kann. Die genannte, global kegelstumpfartig ausgebildete Gestalt wird jedoch durch dieses Mauerwerk nicht beeinträchtigt.

Der Stützkörper 15 ist bodenseitig mit einer Reihe von - in Umfangsrichtung gleichmäßig verteilten Ausnehmungen 17 ausgerüstet, so daß der, durch den Stützkörper umschlossene Hohlraum innerhalb des Sammelgefäßes 12 mit dem verbleibenden Raum des Sammelgefäßes in Verbindung steht.

Das Überlaufgefäß 16 ist seinerseits wiederum als ein metallisches, oberseitig offenes, zylindrisch ausgebildetes Gefäß ausgebildet, welches in dem gezeigten Ausführungsbeispiel bis an seine oberseitige Berandung in die Substanz des Stützkörpers 15 in geeigneter Weise eingebunden ist. Das Überlaufgefäß 16 befindet sich in definierter Höhe oberhalb des Aufnahmegefäßes 1. Die metallische Stützstruktur des Stützkörpers 15 kann mit dem Überlaufgefäß 16 einerseits und dem Bodenbereich 14 des Sammelgefäßes 12 andererseits in geeigneter Weise in fester Verbindung stehen.

Mit 18 ist eine, koaxial zu der Vertikalachse 4 verlaufende, im Bodenbereich 19 des Überlaufgefäßes 16 in dieses einmündende Rohrleitung bezeichnet, die somit innerhalb des, von dem Stützkörper 15 umschlossenen Raumes vertikal geführt ist und den Bodenabschnitt 14 des Sammelgefäßes 12 durchdringt.

Mit 20 ist eine, im Bodenbereich 14 des Sammelgefäßes 12 einmündende Rohrleitung bezeichnet, die an ihrem, dem Sammelgefäß 12 abgekehrten Ende über einen Rohrleitungszug 21, in dessen Verlauf eine Pumpe 22 eingebunden ist, mit dem unteren Ende der Rohrleitung 18 in Verbindung steht. Die Rohrleitung 20, der Rohrleitungszug 21, die Rohrleitung 18, das Überlaufgefäß 16, eine auf der Außenseite des Stützkörpers 15 filmartig herabströmende Flüssigkeit, nämlich die offene Strömungsstrecke und das Sammelgefäß 12 bilden die Kreislaufführung 2 des Wassers, wobei die Pumpe 22, deren Förderrichtung dem Pfeil 23 entspricht, die treibende Kraft bildet.

Mit 24 ist ein Sensor zur Erfassung des Flüssigkeitspegels bezeichnet, wobei vorzugsweise ein solcher Sensor eingesetzt ist, der ausgangsseitig ein elektrisches Signal liefert. Der Sensor 24 steht über eine Meßleitung 25 mit der Steuerung 3 in Verbindung. Es kann sich bei dem Sensor 24 im einfachsten Fall um einen, durch das Flüssigkeitsniveau beeinflußten zwei Schaltzustände aufweisenden Schalter handeln, der dementsprechend lediglich bei zwei Grenzzuständen ein Meß- bzw. Schaltsignal über die Meßleitung 25 überträgt, nämlich einem maximalen einerseits und einem minimalen Flüssigkeitspegel andererseits.

Mit 26 ist ein, in den Rohrleitungszug 21 eingebundener Verzweigungspunkt bezeichnet, an den eine, mit einem schaltbaren Absperrorgan 27 versehene Rohrleitung 28 angeschlossen ist. Das Absperrorgan 27 ist elektrisch betätigbar ausgebildet und steht über eine Steuerleitung 29 mit der Steuerung 3 in Verbindung.

Der Sensor 24, die Meßleitung 25 sowie die Rohrleitung 28 in Verbindung mit dem Absperrorgan 27 bilden einen Regelkreis, der der Steuerung des Flüssigkeitsniveaus innerhalb des Sammelgefäßes 13 und im Bodenbereich des Aufnahmegefäßes 1 dient. Hierauf wird im folgenden noch näher eingegangen werden.

Mit 30 ist ein, ebenfalls in den Rohrleitungszug 21 eingebundener Temperaturmeßpunkt bezeichnet, nämlich ein, ausgangsseitig ein elektrisches Meßsignal liefernder Temperaturfühler, der über eine Meßleitung 31 mit der Steuerung 3 in Verbindung steht. Es ist ferner in den Verlauf des Rohrleitungszuges 21 eine Beheizungseinrichtung 32 eingebunden, die ihrerseits mit einer Steuerleitung 33 mit der Steuerung 3 in Verbindung steht. Der Temperaturmeßpunkt 30 sowie die Beheizungseinrichtung 32 in Verbindung mit der Meßleitung 31 und der Steuerleitung 33 bilden ihrerseits einen Regelkreis, der der Temperierung des im Rahmen der Kreislaufführung 2 geführten Wassers dient.

Schließlich ist mit 34 eine zur Steuerung und Energieversorgung der Pumpe 22 dienende Leitung bezeichnet, wobei die Steuerung ihrerseits über eine Leitung 35 mit einer externen, zeichnerisch nicht dargestellten, geeigneten Spannungsquelle in Verbindung steht.

Der Rohrleitungszug 21, die Beheizungseinrichtung 32, die Pumpe 22 sowie die Steuerung 3 nebst zugeordneten Meß- und Steuerleitungen können in einem, durch die gestrichelte Linie 36 angedeuteten Gehäuse räumlich zusammengefaßt angeordnet sein, wobei dieses Gehäuse 30 entfernt vom Aufstellungsort des Systems aus Aufnahmegefäß 1, Überlaufgefäß 16 und Sammelgefäß 12 untergebracht sein kann. Grundsätzlich kann dieses Gehäuse oder zumindest ein Teil der in diesem untergebrachten Komponenten auch innerhalb des, durch den Stützkörper 15 umschlossenen Raumes angeordnet sein. Der Stützkörper ist in diesem Fall mit geeigneten, schließbaren Öffnungen für Inspektion und Wartung der genannten Komponenten ausgerüstet.

Zum Gebrauch dieser Vorrichtung wird das Aufnahmegefäß 1 zur Aufnahme einer Hydrokultur benutzt und mit einer Füllung aus porösen Tonpartikeln oder dergleichen versehen, die zur Aufnahme von zeichnerisch nicht wiedergegebenen Pflanzen dienen. Über die Pumpe 22 wird ständig Wasser umgewälzt, welches über die Rohrleitung 18 aufsteigt, wobei sich im Rahmen des Überlaufgefäßes 16 eine Strömungsberuhigung ergibt und wobei aufgrund des, über die Berandung des Überlaufgefäßes 16 filmartig strömenden Wassers die gesamte Außenkontur des Stützgefäßes 15 gleichförmig überströmt wird. Zur Vermeidung von Strömungsgeräuschen ist diese Außenkontur derart ausgebildet, daß sich ein möglichst stetiger Verlauf der filmartigen Strömung ergibt, wobei insbesondere aufgrund der konischen Ausbildung ein freier Fall des Wassers verhindert ist. Die filmartige Ausbildung der sich abwärts bewegenden Strömung bedingt eine sehr große Strömungsoberfläche, welche in eine intensive thermische Wechselbeziehung zu der umgebenden Raumluft tritt und einen bedeutenden Beitrag zu deren Konditionierung geleistet, insbesondere mit Hinblick auf die sich einstellende relative Feuchtigkeit. Eine außenseitige poröse Ausbildung der Substanz des Stützkörpers 15 ist in diesem Zusammenhang als besonders zweckmäßig anzusehen. Beispielsweise kann diese Substanz aus Lavagestein bestehen.

Das, auf der Außenseite des Stützkörpers herabströmende Wasser tritt in das Sammelgefäß 12 ein, dessen Flüssigkeitsniveau vorzugsweise zwischen zwei Grenzzuständen geregelt ist. Es sind dies Grenzzustände, welche durch den Flüssigkeitsbedarf der in dem Aufnahmegefäß 1 aufgenommenen Pflanzen bestimmt werden, deren zeitlicher Verlauf u.a. auch von der jeweiligen Jahreszeit abhängig ist. Ist beispielsweise zu einem gegebenen Zeitpunkt das Flüssigkeitsniveau zu niedrig, oder hat eine Trockenphase während eines ausreichenden, jeweils pflanzentypischen Zeitintervalls angestanden, wird dieser Zustand über den Sensor 24 erkannt, wobei in der Folgezeit über die Steuerung 3 und das Absperrorgan 27 Flüssigkeit in die Kreislaufführung 2 solange eingespeist wird, bis das obere Flüssigkeitsniveau oder ein sonstiges, vorgebbares Zwischenniveau erreicht ist. Ist letztgenanntes Niveau erreicht, wird über die Steuerung 3 das Absperrorgan 27 erneut in den Schließzustand geschaltet. In der Folgezeit wird das obere Flüssigkeitsniveau wiederum während eines ausreichenden, pflanzentypischen Zeitintervalls gehalten. Im Bedarfsfall kann die Rohrleitung 28 sowie das Absperrorgan 27 auch zur Flüssigkeitsentnahme und damit zum gezielten Absenken des Flüssigkeitspegels benutzt werden, wobei aufgrund der radial einwärts geneigten Ausbildung des Bodenabschnitts 9 eine vollständige bodenseitige Trockenlegung des Aufnahmegefäßes 1 möglich ist.

Gleichzeitig mit der Niveauregulierung findet auch eine Temperierung des strömenden Wassers über den, aus dem Temperaturmeßpunkt 30 und der Beheizungseinrichtung 32 vorgegebenen Regelkreis statt. Es ist dies eine Zweckmäßigkeit, welche in Verbindung mit der Raumklimatisierung, jedoch gleichermaßen auch bei Verwendung bestimmter exotischer Pflanzen von Vorteil ist.

Eine weitere Ausbaumöglichkeit des Systems, welche vollständig innerhalb des Gehäuses 36 unterbringbar ist, besteht in einer automatischen Überwachung des Nährstoffgehalts des Wassers, welche in Verbindung mit einem, vorzugsweise innerhalb des Gehäuses 36 angeordneten Vorratsbehälter für flüssige Nährstoffe möglich ist.

Zeichnerisch nicht dargestellt sind im Verlauf der Rohrleitungen angeordnete Filter, über welche Feststoffe, die den Betrieb der Kreislaufführung 2 beeinträchtigen könnten, zurückgehalten werden, welche demzufolge von Zeit zu Zeit entfernt bzw. ausgetauscht werden müssen.

Man erkennt, daß in obiger Baueinheit und eine vollautomatisiert betreibbare Hydrokultur zur Verfügung steht, die sich insbesondere für gewerblich genutzte Räume eignet, deren Pflegeaufwand kleinstmöglich gehalten ist und welche darüber hinaus einen hervorragenden Beitrag zur Raumklimatisierung leistet.

Das in Fig. 1 gezeigte Ausführungsbeispiel einer erfindungsgemäßen Baueinheit ist zum festen Einbau in die Bodenstruktur eines Gebäudes bestimmt, wobei zum Betrieb sowie Einbau lediglich ein Rohranschluß zur Zuführung sowie zum Abführen von Wasser und eine Spannungsquelle benötigt werden.

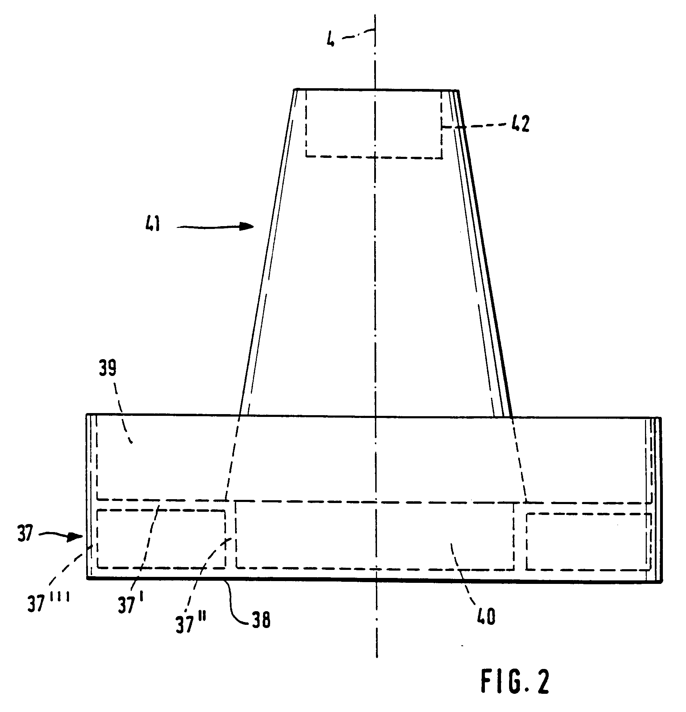

Fig. 2 zeigt ein vereinfachtes Ausführungsbeispiel, daß zwar in wesentlichen Funktionselementen mit demjenigen der Fig. 1 übereinstimmt, jedoch derart ausgestaltet ist, daß es zum unmittelbaren Aufsetzen auf den Boden eines Raumes bestimmt ist und somit als mobil handhabbar anzusehen ist.

Mit 37 ist ein Unterteil bezeichnet, dessen Unterseite 38 als Aufstandfläche bestimmt ist und welches oberseitig mit einer ringartigen, ein Aufnahmegefäß 39 für eine Hydrokultur bildenden Ausnehmung versehen ist. Das Unterteil 37 beinhaltet ferner ein Sammelgefäß 40, welches den gesamten unteren Bereich in Anspruch nimmt. Mit 37' ist ein, etwa im mittleren Bereich des Unterteils 37 angesetzter, sich koaxial zu der Vertikalachse 4 erstreckender Zwischenboden bezeichnet, der den Bodenabschnitt des Aufnahmegefäßes 39 bildet und dessen radial inneres Ende auf einem sich axial erstreckenden Wandabschnitt 37'' abgestützt ist. Der Wandabschnitt 37'' ist mit zeichnerisch nicht dargestellten Ausnehmungen versehen, so daß im Betriebszustand das Unterteil bis in den Bereich der Außenwandung 37''' gefüllt ist.

Mit 41 ist ein pyramidenstumpfförmiges, zur Oberseite hin sich querschnittsmäßig verjüngendes Oberteil bezeichnet, welches zum Aufstecken auf entsprechende, zeichnerisch nicht wiedergegebene Gegenelemente des Unterteils 37 im Bereich der oberen Berandung des Wandabschnitts 37'' bestimmt und ausgestaltet ist. Das Oberteil 41 bildet einen hohl ausgebildeten Stützkörper, der an seinem oberen Ende ein Überlaufgefäß 42 trägt. Das Oberteil 41 kann gleichzeitig sämtliche Organe zur Realisierung einer Kreislaufführung des Wassers einschließlich einer Pumpe beinhalten, so daß ein Kreislauf ausgehend von dem Sammelgefäß 40 über eine zum Überlaufgefäß 42 führende Rohrleitung und ausgehend von dem Überlaufgefäß 42 über die Außenseiten des Oberteils 41 in Richtung auf das Sammelgefäß 40 zurück realisiert ist. In Abweichung von dem Ausführungsbeispiel gemäß Fig. 1 ist jedoch kein stationärer Anschluß zur automatischen Versorgung mit Wasser vorgesehen sondern es wird ein Flüssigkeitsstandsensor lediglich zur Erzeugung eines optischen und/oder akustischen Signals benutzt, um den aktuellen Füllstand und/oder ein Unterschreiten eines unteren Füllstandes anzuzeigen. Der Betrieb der in Fig. 2 gezeigten Vorrichtung erfordert somit lediglich eine Spannungsquelle zur Energieversorgung von Meß- und Steuerelementen der Kreislaufführung, welche somit - von dem Verzweigungspunkt 26 sowie der Rohrleitung 28 des Ausführungsbeispiels gemäß Fig .1 abgesehen - erstgenanntem Ausführungsbeispiel prinzipiell entsprechen können. Das Oberteil 41 ist hohl ausgebildet und im Bereich seiner unteren Seitenwandungen mit zeichnerisch nicht wiedergegebenen Ausnehmungen versehen, durch welche in ähnlicher Weise wie bei dem Ausführungsbeispiel gemäß Fig. 1 erreicht wird, daß über eine Steuerung des Flüssigkeitsniveaus innerhalb des Sammelgefäßes 40 das Flüssigkeitsniveau innerhalb des Aufnahmegefäßes steuerbar ist.

Der Zwischenboden 37' ist radial einwärts geneigt angeordnet, so daß über eine Absenkung des Flüssigkeitsniveaus eine völlige Trockenlegung des Aufnahmegefäßes möglich ist.

In Abweichung von dem Ausführungsbeispiel gemäß Fig. 1 wird die Innenwand des Aufnahmegefäßes 39 unmittelbar durch die Außenwand des Oberteils 41 gebildet.

Im Ergebnis ist auch in der Vorrichtung gemäß Fig. 2 eine weitgehend automatisiert betreibbare Hydrokultur realisiert, die aufgrund des über die Außenseite des Oberteils 41 ständig filmartig, d.h. ohne Strömungsgeräusche fließenden Wassers, insbesondere aufgrund dessen großer Oberfläche auch einen bedeutenden Beitrag zur Raumklimatisierung leistet.

Zur Vereinfachung können Unterteil 37 und Oberteil 38 weitestgehend aus einem geeigneten Kunststoff ausgebildet sein, in den die bezeichneten Gefäße, nämlich Aufnahmegefäß, Sammelgefäß und Überlaufgefäß eingeformt sind. Eine vorteilhafte Ausgestaltung des Ausführungsbeispiels gemäß Fig. 2 betrifft die Anordnung eines solchen Flüssigkeitsbehälters, der einerseits ein Flüssigkeitsreservoir bildet, aus welchem der Kreislaufführung Wasser zugeführt werden kann, der andererseits einen Aufnahmebehälter bildet, dem wasser aus der Kreislaufführung zwecks Absenkung des Flüssigkeitsniveaus des Sammelgefäßes 40 und damit des Aufnahmegefäßes 39 zugeführt werden kann. Die Vorgänge des Zuführens von Wasser in den Flüssigkeitsbehälter sowie der Entnahme von Wasser aus dem Flüssigkeitsbehälter sind über eine Steuerung in beliebiger, jeweils pflanzentypischer zeitlicher Reihenfolge automatisch durchführbar. Ein solcher Flüssigkeitsbehälter kann innerhalb des Oberteils 41 angeordnet sein.

In besonders einfach gelagerten Fällen kann auch der Innenraum des hohl ausgebildeten Oberteils unmittelbar wenigstens teilweise als Flüssigkeitsbehälter im obigen Sinne benutzt werden.

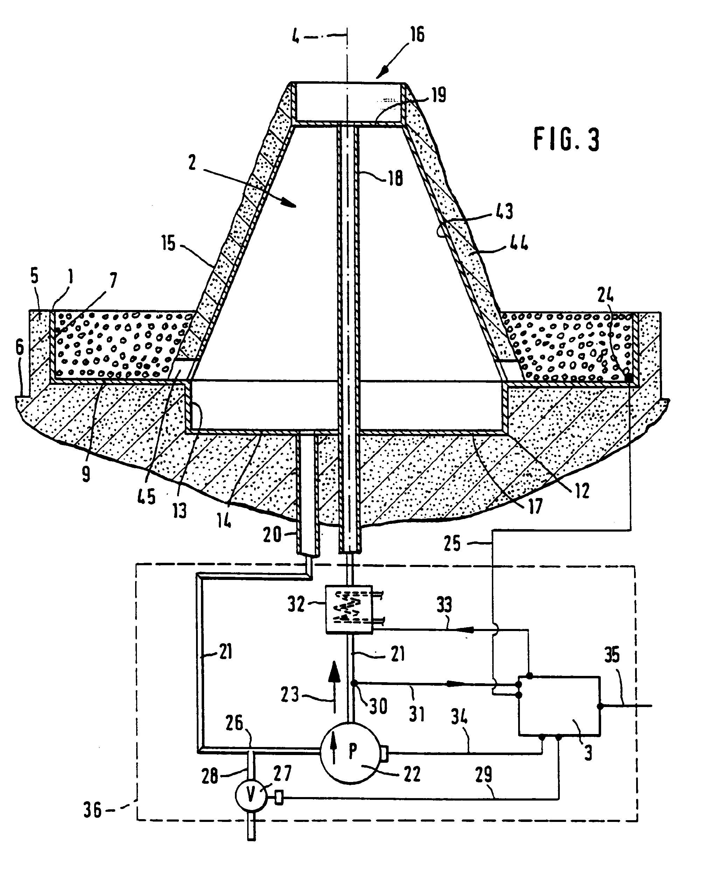

Das in Fig. 3 gezeigte Ausführungsbeispiel entspricht im wesentlichen demjenigen der Fig. 1, wobei entsprechende Funktionselemente auch entsprechend beziffert sind, so daß auf eine diesbezügliche wiederholte Beschreibung verzichtet werden kann. Die Abweichungen gegenüber Fig. 1 betreffen lediglich die Ausgestaltung- sowie Anordnung des Stützkörpers 15.

Der grundsätzliche Aufbau des Stützkörpers 15 kann demjenigen der Fig. 1 entsprechen. Er besteht somit aus einer metallischen Stützstruktur 43, welche hier eine kegelstumpfartige Gestalt aufweist. Die Stützstruktur 43 trägt außenseitig eine dekorativ wirkende Beschichtung 44 nach Art eines Mauerwerkes, welches vorzugsweise aus porösem Gestein besteht. In Betracht kommt jedoch auch eine sonstige, insbesondere poröse und damit flüssigkeitsbindende Beschichtung.

Die Stützstruktur 43 ist unmittelbar auf das obere Ende der Wandung 13 des Sammelgefäßes 12 und damit auf den radial inneren Rand des Bodenabschnitts 9 aufgesetzt. Sie kann mit der Wandung 13 und in gleicher Weise mit dem Überlaufgefäß 16, an dessen untere Berandung sie angesetzt ist, in geeigneter Weise verbunden sein, beispielsweise durch Verschweißung. Das untere Ende der Stützstruktur 43 einschließlich der Beschichtung ist wiederum mit einer Reihe von in Umfangsrichtung gleichmäßig verteilten Ausnehmungen 45 versehen, so daß über das Flüssigkeitsniveau innerhalb des Sammelgefäßes 12 dasjenige des Aufnahmegefäßes 1 steuerbar ist.

Das Aufnahmegefäß 1 weist eine radial äußere Wandung 7 auf, wohingegen die innere Begrenzung durch die Außenseite des Stützkörpers 15, d.h. hier der Beschichtung 44 gebildet wird. Praktisch bedeutet dies, daß bei gleichen äußeren Abmessungen im Vergleich zu dem Ausführungsbeispiel gemäß Fig. 1 eine entsprechend größere Fläche zur Verfügung steht.

Die Ausführungsbeispiele der Fig. 1 bis 3 sind durch einen rotationssymmetrischen Aufbau gekennzeichnet. Dieser gewährleistet in einfacher Weise eine gleichmäßige Überströmung und damit eine günstige praktische Realisierungsform der für die Raumklimatisierung wichtigen offenen Strömungsstrecke. Die Erfindung ist jedoch grundsätzlich nicht auf diese rotationssymmetrische Ausführungsform beschränkt. So können das Aufnahmegefäß, das Sammelgefäß und der Stützkörper grundsätzlich eine beliebige Querschnittsgestalt aufweisen, wobei lediglich Ähnlichkeiten zwischen der Kontur des Überlaufgefäßes, der Querschnittsform des Stützkörpers sowie derjenigen des Sammelgefäßes bestehen sollten, um eine gleichmäßige Strömung zu realisieren. Der Neigungswinkel des Stützkörpers kann in weiten Grenzen variiert werden. So kann der Stützkörper in einem Extremfall auch durch eine Säule gebildet werden, so daß die offene Strömungsstrecke durch eine praktisch vertikal orientierte Strömung gebildet wird. In einem anderen Extremfall kann der Stützkörper jedoch auch durch ein extrem geringes Gefälle gekennzeichnet sein.

Zeichnerisch nicht wiedergegeben sind Sicherheitseinrichtungen, die für den Betrieb einer jeden automatisiert betriebenen Baueinheit notwendig oder zumindest zweckmäßig sind. Diese beziehen sich auf Maßnahmen zur Verhinderung eines Flüssigkeitsanstiegs innerhalb des Sammelgefäßes und damit des Aufnahmegefäßes über ein Höchstmaß hinaus, insbesondere im Fall einer Störung des Flüssigkeitszulaufs. Diese Maßnahmen können im Fall eines orstfest angeordneten Rohranschlusses, beispielsweise der Rohrleitung 28 darin bestehen, daß automatisch eine flüssigkeitsleitende Verbindung zu einer Entwässerungsleitung hergestellt wird oder - im Fall einer relativ kleineren mobilen Baueinheit in der Anordnung von seitlichen Austrittsöffnungen innerhalb der Wandung des Aufnahmegefäßes.

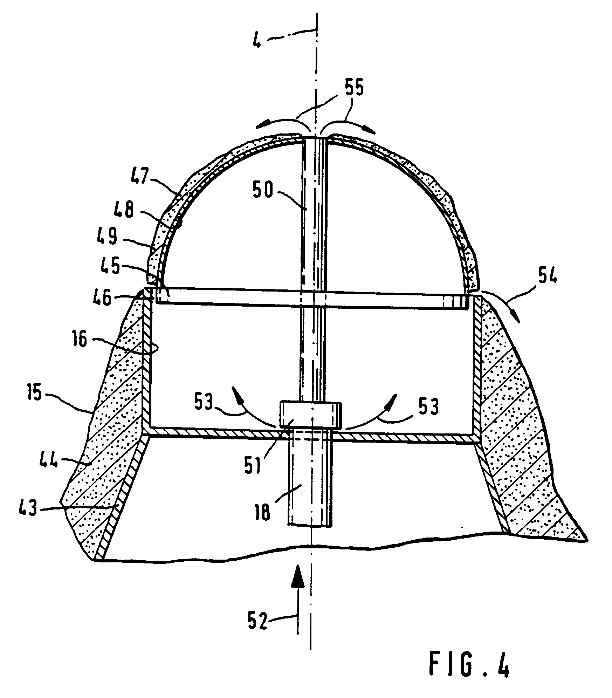

Fig. 4 zeigt eine besondere Ausgestaltung des oberen Endabschnitts des Stützkörpers 15, der seinerseits wiederum aus einer metallischen Stützstruktur 43 besteht, die oberseitig das Überlaufgefäß 16 trägt und außenseitig eine aus einem dekorativ wirkenden, vorzugsweise porösen Mauerwerk bestehende Beschichtung 44.

Mit 45 ist eine, die Oberseite des Überlaufgefäßes 16 - von einem Ringspalt 46 abgesehen - verschließende, koaxial zu der Vertikalachse 4 angeordnete Kreisplatte bezeichnet, die in geeigneter Weise - mit der oberen Berandung des Überlaufgefäßes 16 abschneidend - gehalten ist. Die Kreisplatte 45 ist ihrerseits Träger eines global halbkugelartigen, oberseitig ausgewölbten Verteilkörpers 47, der strukturell ähnlich dem Stützkörper 15 ausgebildet ist. Er besteht aus einer metallischen Stützstruktur 48, die außenseitig eine dekorativ wirkende, vorzugsweise aus einem porösen Mauerwerk oder einem sonstigen porösen Werkstoff bestehende Beschichtung 49 trägt. Die Kreisplatte 15 ist ihrerseits ebenfalls metallisch ausgestaltet.

Die sich koaxial zu der Vertikalachse 4 innerhalb des Stützkörpers 15 erstreckende Rohrleitung 18 ist innerhalb des Überlaufgefäßes 16 in einer, durch die Kreisplatte 45 hindurchgeführten und im Scheitel des Verteilkörpers 47 mündenden Rohrleitung 50 fortgeführt. Hierbei ist die Rohrleitung 50 umfangsseitig dichtend in die Kreisplatte 45 eingesetzt. Mit 51 ist eine Steuereinrichtung bezeichnet, die jedoch nur schematisch angedeutet ist und dazu dient, daß in Richtung des Pfeiles 52 in der Rohrleitung 18 aufsteigende Wasser nach einem vorgebbaren Verhältnis auf die Rohrleitung 50 einerseits und das Überlaufgefäß 16 andererseits zu verteilen. Das obere Ende der Rohrleitung 18 im Bereich der Steuereinrichtung 51 ist zu diesem Zweck mit umfangsseitigen, zeichnerisch nicht dargestellten Ausströmöffnungen versehen, über welche Wasser in Richtung der Pfeile 53 in das Überlaufgefäß 16 einströmen kann.

Im praktischen Betrieb einer gemäß Fig. 4 ausgebildeten Baueinheit ist das Überlaufgefäß 16 wie bei den vorangegangenen Ausführungsbeispielen gefüllt und es wird dessen obere Berandung laufend überströmt. Dieses Überströmen vollzieht sich durch den Ringspalt 46 und dessen Fortsetzung im Übergangsbereich zwischen den Beschichtungen 44 des Stützkörpers 15 einerseits und 49 des Verteilkörpers 47 andererseits gemäß dem Pfeil 54. Gleichzeitig strömt kontinuierlich Wasser aus der im Scheitel des Verteilkörpers 47 befindlichen Ausströmöffnung der Rohrleitung 50 entsprechend den Pfeilen 55. Wesentlich für eine einwandfreie Funktion eines Ausführungsbeispiels gemäß Fig. 4 ist, daß die Gestaltung des Verteilkörpers 47 derart erfolgt, daß eine gleichmäßige, d.h. Strömungsgeräusche weitestgehend vermeidende Oberflächengestaltung gegeben ist. Wesentlich ist ferner, daß das Verhältnis zwischen den, in Richtung der Pfeile 53, 54 einerseits und 55 andererseits fließenden Teilströme ebenfalls dahingehend ausgelegt ist, daß das Gesamtgebilde, bestehend aus Stützkörper 15 und Verteilkörper 47 gleichförmig überströmt werden. Dies bringt insgesamt den Vorteil mit sich, daß global der Eindruck eines allseitig gleichförmig flüssigkeitsüberströmten Körpers besteht, ohne daß an irgendeiner Stelle eine ruhende Wasserfläche, wie z.B. im Fall eines einzelnen Überlaufgefäßes besteht. Die Gestaltung des Verteilkörpers 47 ist naturgemäß an diejenige des Stützkörpers angepaßt. Die rotationssymmetrische Ausgestaltung gemäß Fig. 4 ist jedoch keineswegs zwingend und es können grundsätzlich beliebige Querschnittsformen Anwendung finden, soweit eine strömungsgeräuscharme Zusammenfassung der über den Verteilkörper 47 einerseits und aus dem Ringspalt 46 austretenden Teilströme andererseits gegeben ist.

Es ist gleichzeitig vorstellbar, dieses Prinzip dahingehend zu extrapolieren, daß - insbesondere bei großflächig ausgedehnten Überlaufgefäßen - mehrere diskrete Überströmkörper 48 angeordnet sind, die individuell mit Teilströmen des in der Kreislaufführung zirkulierenden Wassers beschickt werden. Alternativ hierzu können mehrere Überströmkörper auch zusammengefaßt werden, jedoch mit mehreren, als Quelleitungen fungierenden Rohrleitungen 50 versehen sein, wobei naturgemäß eine modifizierte Steuereinrichtung 51 erforderlich ist, um eine einstellbare Verteilung der Teilströme vornehmen zu können.

Eine poröse Oberflächenbeschichtung ist von Vorteil - grundsätzlich sind - nach Maßgabe der Strömungsgeräuschentwicklung - jedoch auch beliebige Oberflächen denkbar, wobei dementsprechend auch das Steigungsmaß bzw. die Krümmung des Verteilkörpers 47 in gleicher Weise wie diejenige des Stützkörpers 15 variierbar ist.

Die erfindungsgemäße Baueinheit kann mit einer Sprüheinrichtung ausgerüstet sein, die relativ zu dem Stützkörper 15 bzw. dem Überlaufgefäß 16,42 beweglich angeordnet ist. Sie kann beispielsweise zwischen zwei Grenzstellungen bewegbar sein, nämlich einer Rückzugstellung einerseits, in welcher sie in den Stützkörper oder das Überlaufgefäß eingezogen ist und einer Betriebsstellung andererseits, in welcher sie aus dem Stützkörper oder das Überlaufgefäß eingezogen ist und einer Betriebsstellung andererseit, in welcher sie aus dem Stützkörper bzw. dem Überlaufgefäß herausragt und sich in einer zum Besprühen der Pflanzen innerhalb des Aufnahmegefäßes geeigneten Position befindet. Das Verschieben der Sprüheinrichtung zwischen den genannten Grenzstellungen kann im einfachsten Fall hydraulisch unter Nutzung des Zuführungsdrucks des Wassers erfolgen. Die Betätigung der Sprüheinrichtung kann über die Steuerung nach Ablauf vorherbestimmter Zeitintervalle oder auch in Abhängigkeit von Parametern der Umgebungsatmosphäre wie z.B. relativer Luftfeuchte, Temperatur usw. erfolgen.

Es kann ferner eine Lichtquelle vorgesehen sein, um während steuerbarer Zeitintervalle Tageslichtverhältnisse einzustellen. Die Lichtquelle kann an den Stützkörper, jedoch auch außerhalb desselben in geeigneter Weise angebracht sein.

## Patentansprüche

1. Baueinheit zur Klimatisierung von Räumen, mit einer Kreislaufführung (2) für Wasser zwischen wenigstens einem Überlaufgefäß (16,42) und wenigstens einem Sammelgefäß (12,40), wobei im Rahmen der Kreislaufführung (2) zwischen dem Überlaufgefäß (16,42) und dem Sammelgefäß (12,40) eine für das überlaufende Wasser bestimmte, offene, großflächige, eine geringe Tiefe aufweisende, einen intensiven Wärme- und Stoffaustausch mit der Umgebung ermöglichende, abwärts in das Sammelgefäß (12,40) führende Strömungsstrecke angeordnet ist, wobei das Sammelgefäß (12,40) mit Abstand unterhalb des Überlaufgefäßes (16,42) angeordnet ist und wobei zur Förderung des Wassers ausgehend von dem Sammelgefäß (12,40) in Richtung auf das Überlaufgefäß (16,42) eine Pumpe (22) vorgesehen ist,
dadurch gekennzeichnet,
- daß wenigstens ein, zur Aufnahme von Pflanzen bestimmtes Aufnahmegefäß (1,39) vorgesehen ist, wobei das Aufnahmegefäß (1,39) und das Sammelgefäß (12,40) relativ zueinander nach Art kommunizierender Gefäße derart angeordnet sind, daß das Flüssigkeitsniveau in dem Aufnahmegefäß (1,39) über eine Steuerung des Flüssigkeitsniveaus des Sammelgefäßes (12,40) steuerbar ist,
- daß dem Aufnahmegefäß (1,39) oder dem Sammelgefäß (12,40) ein Sensor (24) zur Erfassung des Flüssigkeitsniveaus zugeordnet ist, der mit einer Steuerung (3) in Verbindung steht und
- daß die Kreislaufführung (2) eine Rohrleitung (28) umfaßt, die mit einem Flüssigkeitsreservoir in Verbindung steht, welches in Verbindung mit einer Pumpe und der Steuerung (3) ein willkürliches Absenken oder Anheben des Flüssigkeitsniveaus innerhalb des Aufnahmegefäßes (1,39) ermöglicht.

2. Baueinheit nach Anspruch 1, dadurch gekennzeichnet, daß der Bodenbereich des Aufnahmegefäßes (1,39) in Richtung auf das zugeordnete Sammelgefäß (12,40) hin geneigt angeordnet ist.

3. Baueinheit nach Anspruch 1 oder 2, dadurch gekennzeichnet,
- daß die offene Strömungsstrecke durch die äußere Oberfläche eines Strömungskörpers gebildet wird, der sich vorzugsweise ausgehend von seiner Aufstandfläche bis zu seinem oberen Ende querschnittsmäßig kontinuierlich verjüngt,
- daß in das obere Ende des Strömungskörpers das Überlaufgefäß (16,42) eingebunden ist und
- daß die Aufstandfläche des Strömungskörpers innerhalb des Sammelgefäßes (12,40) oder des Aufnahmegefäßes (1,39) angeordnet ist.

4. Baueinheit nach einem der Ansprüche 1 oder 2, dadurch gekennzeichnet, daß die offene Strömungsstrecke durch eine schiefe Ebene gebildet wird.

5. Baueinheit nach einem der Ansprüche 1 bis 3, dadurch gekennzeichnet, daß das Aufnahmegefäß (1,39) den Strömungskörper umgibt.

6. Baueinheit nach einem der Ansprüche 1 bis 5, dadurch gekennzeichnet, daß der Bodenabschnitt (9) des Aufnahmegefäßes (1) in etwa niveaugleich mit der oberen Berandung des Sammelgefäßes (12) angeordnet ist.

7. Baueinheit nach einem der Ansprüche 1 bis 3, 5 oder 6, dadurch gekennzeichnet,
- daß das Überlaufgefäß (16,42) und das Sammelgefäß (12,40) jeweils als oberseitig offene zylindrische Gefäße ausgestaltet sind,
- daß das Aufnahmegefäß (1,39) als ringzylinderartiges, oberseitig offenes Gefäß ausgestaltet ist und
- daß das Überlaufgefäß (16,42), das Sammelgefäß (12,40) und das Aufnahmegefäß (1,39) auf unterschiedlichen Niveaus koaxial zu einer vertikalen Achse (4) angeordnet sind.

8. Baueinheit nach Anspruch 7, dadurch gekennzeichnet, daß der Strömungskörper global kegelstumpfartig ausgestaltet und koaxial zu der Vertikalachse (4) angeordnet ist.

9. Baueinheit nach Anspruch 7 oder 8, dadurch gekennzeichnet, daß das Aufnahmegefäß (1,39) radial außerhalb des Sammelgefäßes (12,40) und letzteres radial außerhalb des Überlaufgefäßes (16,42) angeordnet ist.

10. Baueinheit nach einem der vorangegangenen Ansprüche 1 bis 9, dadurch gekennzeichnet,
- daß das Aufnahmegefäß (1,39), das Sammelgefäß (12,40) und das Überlaufgefäß (16,42) als metallische, aus Kunststoff oder einem anorganischen Werkstoff bestehende Gefäße ausgestaltet sind und
- daß die Gefäße in eine Substanz aus anorganischem oder organischem Werkstoff eingebunden sind.

11. Baueinheit nach einem der vorangegangenen Ansprüche 1 bis 9, dadurch gekennzeichnet, daß das Aufnahmegefäß, das Sammelgefäß und das Überlaufgefäß in aus anorganischem oder organischem Werkstoff bestehende Bauteile der Baueinheit eingeformt sind, welche Bauteile zumindest die Strömungsstrecke umfassen.

12. Baueinheit nach einem der Ansprüche 1 bis 11, gekennzeichnet durch ein zum Aufstellen auf einem Boden bestimmtes Unterteil (37) und ein Oberteil (41), wobei das Oberteil (41) mit dem Unterteil (37) in lösbarer Verbindung steht.

13. Baueinheit nach einem der vorangegangenen Ansprüche 1 bis 12, dadurch gekennzeichnet, daß die Strömungsstrecke bzw. der Strömungskörper als hohler Stützkörper (15) ausgestaltet sind.

14. Baueinheit nach Anspruch 13, dadurch gekennzeichnet,
- daß der Stützkörper (15) aus einer innenseitig angeordneten, vorzugsweise metallischen Stützstruktur besteht, die außenseitig, d.h. das Strömungsbett bildend mit einer porösen organischen oder anorganischen Beschichtung überzogen ist und
- daß das Überlaufgefäß (16,42) lösbar in den Stützkörper (15) eingesetzt ist.

15. Baueinheit nach einem der vorangegangenen Ansprüche 1 bis 14, dadurch gekennzeichnet,
- daß das Überlaufgefäß (16,42) - von einem, dessen Kontur nachgebildeten, randseitigen Spalt (46) abgesehen - von einem Verteilkörper (47) überdeckt ist,
- daß der Verteilkörper (47) im Bereich seiner oberseitigen Oberfläche zum gleichförmigen, filmartigen Überströmen bestimmt und ausgestaltet ist und
- daß der Verteilkörper (47) in seinem oberen, mittleren Bereich eine Ausströmöffnung aufweist, die mit einer Zuströmöffnung des Überlaufgefaäßes dahingehend in Verbindung steht, daß die in ds Überlaufgefäß einströmende Flüssigkeit nach Maßgabe eines einstellbaren Verhältnisses auf die Ausströmöffnung einerseits und den Spalt (46) andererseits verteilt wird.

16. Baueinheit nach einem der Ansprüche 1 bis 15, dadurch gekennzeichnet,
- daß die Kreislaufführung (2) mit einem Verzweigungspunkt (26) ausgerüstet ist, an den die Rohrleitung (28) zur Zuführung bzw. zur Entnahme von Flüssigkeit angeschlossen ist und
- daß die Rohrleitung (28) mit einem schaltbaren Absperrorgan (27) ausgerüstet ist, welches mit der Steuerung (3) in Verbindung steht.

17. Baueinheit nach einem der vorangegangenen Ansprüche 1 bis 16, dadurch gekennzeichnet,
- daß die Kreislaufführung (2) mit einem Temperaturmeßpunkt (30) ausgerüstet ist, der mit der Steuerung (3) in Verbindung steht und
- daß im Rahmen der Kreislaufführung (2) eine Beheizungseinrichtung (32) zur Beheizung des Wassers angeordnet ist, die mit der Steuerung (3) in Verbindung steht.

18. Baueinheit nach einem der Ansprüche 16 oder 17, dadurch gekennzeichnet, daß die Steuerung (3) mit einer Lichtquelle und/oder einer Sprüheinrichtung in Verbindung steht.

19. Baueinheit nach einem der vorangegangenen Ansprüche 16 bis 18, dadurch gekennzeichnet, daß die Pumpe (22), die Beheizungseinrichtung (32), der Temperaturmeßpunkt (30), die Steuerung (3) sowie das schaltbare Absperrorgan (27) in einem Gehäuse (36) zusammengefaßt sind.

20. Baueinheit nach einem der vorangegangenen Ansprüche 16 bis 18, dadurch gekennzeichnet, daß die Pumpe (22), die Beheizungseinrichtung (32), der Temperaturmeßpunkt (30), das Flüssigkeitsreservoir und die Steuerung (3) innerhalb des Stützkörpers (15) oder des Oberteils (41) zusammengefaßt sind.

21. Baueinheit nach einem der vorangegangenen Ansprüche 18 bis 20, dadurch gekennzeichnet, daß die Sprüheinrichtung zwischen einer in den Stützkörper (15) oder das Überlaufgefäß (16,42) zurückgezogenen und einer, aus dem Stützkörper oder dem Überlaufgefäß herausragenden Betriebsstellung bewegbar angeordnet ist.

## Claims

1. Structural unit for air conditioning premises, having a circuit (2) for water between at least one overflow vessel (16, 42) and at least one collecting vessel (12, 40), wherein included in the circuit (2) between the overflow vessel (16, 42) and the collecting vessel (12, 40) is disposed an open, shallow flow path which is intended for the overflowing water, comprises a large surface area, makes possible an intensive exchange of heat and mass with the environment and leads downwards into the collecting vessel (12, 40), wherein the collecting vessel (12, 40) is disposed under the overflow vessel (16, 42) and spaced therefrom, and wherein in order to convey the water issuing from the collecting vessel (12, 40) towards the overflow vessel (16, 42) a pump (22) is provided,
characterised in that
- at least one reception vessel (1, 39) to receive plants is provided, wherein the reception vessel (1, 39) and the collecting vessel (12, 40) are disposed with respect to each other as communicating vessels in such a way that the fluid level in the reception vessel (1, 39) can be controlled by controlling the fluid level of the collecting vessel (12, 40),
- a sensor (24) for detecting the fluid level is allocated to the reception vessel (1, 39) or to the collecting vessel (12, 40) and is connected to a control device (3) and
- the circuit (2) comprises a pipe line (28) which is connected to a fluid reservoir, which, in connection with a pump and the control device (3), permits the fluid level in the reception vessel (1, 39) to be lowered or raised at will.

2. Structural unit according to claim 1, characterised in that the base region of the reception vessel (1, 39) is disposed inclined towards the associated collecting vessel (12, 40).

3. Structural unit according to claim 1 or 2, characterised in that,
- the open flow path is formed by the outer surface of a flow body which preferably tapers continuously in cross-section from its support surface to its upper end,
- the overflow vessel (16, 42) is integrated into the upper end of the flow body and
- the support surface of the flow body is disposed inside the collecting vessel (12, 40) or the reception vessel (1, 39).

4. Structural unit according to one of claims 1 or 2, characterised in that the open flow path is formed by an inclined plane.

5. Structural unit according to one of claims 1 to 3, characterised in that the reception vessel (1, 39) surrounds the flow body.

6. Structural unit according to one of claims 1 to 5, characterised in that the base portion (9) of the reception vessel (1) is disposed at approximately the same height as the upper edge of the collecting vessel (12).

7. Structural unit according to one of claims 1 to 3, 5 or 6, characterised in that
- the overflow vessel (16, 42) and the collecting vessel (12, 40) are each formed as cylindrical vessels open at the top,
- the reception vessel (1, 39) is formed as an annular cylindrical vessel open at the top and
- the overflow vessel (16, 42), the collecting vessel (12, 40) and the reception vessel (1, 39) are disposed on different levels coaxially to a vertical axis (4).

8. Structural unit according to claim 7, characterised in that the flow body is generally formed as a truncated cone and is disposed coaxially to the vertical axis (4).

9. Structural unit according to claim 7 or 8, characterised in that the reception vessel (1, 39) is disposed radially outside the collecting vessel (12, 40) and the latter is disposed radially outside the overflow vessel (16, 42).

10. Structural unit according to one of the preceding claims 1 to 9, characterised in that,
- the reception vessel (1, 39), the collecting vessel (12, 40) and the overflow vessel (16, 42) are formed as metallic vessels consisting of synthetic material or an inorganic material and
- the vessels are incorporated into an inorganic or organic material.

11. Structural unit according to one of the preceding claims 1 to 9, characterised in that the reception vessel, the collecting vessel and the overflow vessel are shape-formed into component parts of the structural unit consisting of inorganic or organic material, which component parts comprise at least the flow path.

12. Structural unit according to one of claims 1 to 11, characterised by a lower part (37) intended to be positioned on a base, and an upper part (41), wherein the upper part (41) is releasably connected to the lower part (37).

13. Structural unit according to one of the preceding claims 1 to 12, characterised in that the flow path and flow body are formed as hollow support bodies (15).

14. Structural unit according to claim 13, characterised in that
- the support body (15) consists of an internally disposed preferably metal support structure which on the outside, ie in forming the flow bed, is covered with a porous organic or inorganic coating and
- the overflow vessel (16, 42) is releasably inserted into the support body (15).

15. Structural unit according to one of the preceding claims 1 to 14, characterised in that
- the overflow vessel (16, 42) - apart from a slit (46) on its edge and following the contour of the vessel - is covered by a distributing body (47) - the distributing body (47) in its upper surface region is intended and formed to be flowed over in a uniform, film-like manner and
- the distributing body (47) it its upper middle region comprises an out-flow opening which is connected to an in-flow opening of the overflow vessel such that the fluid flowing into the overflow vessel is distributed according to an adjustable ratio to the out-flow opening, on the one hand, and to the slit (46), on the other.

16. Structural unit according to one of claims 1 to 15, characterised in that
- the circuit (2) is provided with a branching point (26) to which the pipeline (28) is connected to supply or remove fluid and
- the pipe line is provided with a switchable shut-off device (27) which is connected to the control device (3).

17. Structural unit according to one of the preceding claims 1 to 16, characterised in that
- the circuit (2) is provided with a temperature measuring point (30) which is connected to the control device (3) and
- included in the circuit (2) a heating device (32) to heat the water is disposed which is connected to the control device (3).

18. Structural unit according to one of claims 16 or 17, characterised in that the control device (3) is connected to a light source and/or to a spray device.

19. Structural unit according to one of the preceding claims 16 to 18, characterised in that the pump (22), the heating device (32), the temperature measuring point (30), the control device (3) and the switchable shut-off device (27) are brought together in a housing (36).

20. Structural unit according to one of the preceding claims 16 to 18, characterised in that the pump (22), the heating device (32), the temperature measuring point (30), the fluid reservoir and the control device are brought together inside the support body (15) or the upper part (41).

21. Structural unit according to one of the preceding claims 18 to 20, characterised in that the spray device is displaceably disposed between an operating position retracted into the support body (15) or the overflow vessel (16, 42) and an operating position protruding out of the support body or the overflow vessel.

## Revendications

1. Ensemble destiné à la climatisation d'espaces comprenant un circuit (2) d'eau reliant au moins un récipient de déversement (16, 42) à au moins un collecteur (12, 40) une zone d'écoulement étant disposée dans ce circuit (2) entre le récipient de déversement (16, 42) et le récipient collecteur (12, 40), ladite zone étant destinée à être mouillée par l'eau déversée du haut et présentant une surface poreuse, de grandes dimensions, tout en étant de faible épaisseur et permettant de réaliser un échange thermique et un échange de matières intensif avec l'environnement par l'intermédiaire de sa paroi inclinée vers le bas dans le collecteur (12, 40) disposée, à une distance préalablement définie, au-dessous du récipient de déversement (16, 42), une pompe (22) étant prévue pour refouler l'eau du collecteur (12, 40) dans le récipient de déversement (16, 42),
caractérisé en ce que :
- l'ensemble comprend au moins un bac (1, 39) disposé à une distance donnée du collecteur (12, 40) et relié à ce dernier selon le principe des vases communicants, de sorte que le niveau du liquide dans le bac (1, 39) puisse être ajusté en fonction du niveau du liquide dans le collecteur (12, 40) ;
- un capteur (24) destiné à mesurer le niveau du liquide est associé au bac (1, 39) ou au collecteur (12, 40) et relié à une unité de commande (3) ; et en ce que
- le circuit (2) comprend une tuyauterie (28) reliée à un réservoir de liquide permettant, en combinaison avec une pompe et l'unité de commande (3), d'abaisser ou d'augmenter le niveau du liquide dans le bac (1, 39).

2. Ensemble selon la revendication 1, caractérisé en ce que le fond du bac (1, 39) est incliné dans le sens radial en direction du collecteur (12, 40).

3. Ensemble selon l'une quelconque des revendications 1 ou 2, caractérisé en ce que :
- la zone d'écoulement poreuse est constituée par la surface extérieure d'un corps d'écoulement dont la forme est conçue, de préférence, de façon que sa section diminue régulièrement depuis sa base vers son extrémité supérieure ;
- l'extrémité supérieure du corps d'écoulement est intégrée dans le récipient de déversement ; et
- la base du corps d'écoulement est disposée à l'intérieur du collecteur (12, 40) ou du bac (1, 39).

4. Ensemble selon l'une quelconque des revendications 1 ou 2, caractérisé en ce que le corps d'écoulement à structure poreuse est constituée par un plan incliné.

5. Ensemble selon l'une quelconque des revendications 1 à 3, caractérisé en ce que le bac (1, 39) est disposé autour de la zone d'écoulement.

6. Ensemble selon l'une quelconque des revendications 1 à 5, caractérisé en ce que le fond (9) du bac (1) est disposé sensiblement au même niveau que le bord supérieur du collecteur (12).

7. Ensemble selon l'une quelconque des revendications 1 à 3, 5 ou 6, caractérisé en ce que :
- le récipient de déversement (16, 42) et le collecteur (12, 40) sont chacun réalisés de sorte qu'ils constituent des récipients cylindriques ouverts en haut ;
- le bac (1, 39) est conçu sous la forme d'un récipient ouvert, cylindrique et annulaire ouvert en haut ; et
- le récipient de déversement (16, 42), le collecteur (12, 40) et le bac (1, 39) sont disposés, à des niveaux différents, dans le sens coaxial par rapport à l'axe vertical (4) de l'ensemble.

8. Ensemble selon la revendication 7, caractérisé en ce que le corps d'écoulement présente globalement une forme tronconique et qu'il est disposé dans le sens coaxial par rapport à l'axe vertical (4) de l'ensemble.

9. Ensemble selon l'une quelconque des revendications 7 ou 8, caractérisé en ce que le bac (1, 39) est disposé, dans le sens radial, à l'extérieur du collecteur (12, 40) et en ce que ce dernier est disposé, dans le sens radial, à l'extérieur du récipient de déversement (16, 42).

10. Ensemble selon l'une quelconque des revendications précédentes 1 à 9, caractérisé en ce que :
- le bac (1, 39), le collecteur (12, 40) et le récipient de déversement (16, 42) sont fabriqués en métal, en matière plastique ou en une matière anorganique et en ce que :
- les récipients sont intégrés dans une substance en matière anorganique ou organique.

11. Ensemble selon l'une quelconque des revendications 1 à 9, caractérisé en ce que le bac, le collecteur et le récipient de déversement sont intégrés dans des éléments en matière anorganique ou organique de l'ensemble, lesdits éléments comprenant au moins la zone d'écoulement.

12. Ensemble selon l'une quelconque des revendications 1 à 11, caractérisé par une partie inférieure destinée à être posée sur un plancher et par une partie supérieure (41) reliée à la partie inférieure (37) de manière à pouvoir être démontée de cette dernière.

13. Ensemble selon l'une quelconque des revendications 1 à 12, caractérisé en ce que le corps d'écoulement est réalisé sous la forme d'un corps d'appui creux (15).

14. Ensemble selon la revendication 13, caractérisé en ce que :
- le corps d'appui (15) comprend une structure, de préférence métallique, disposée à l'intérieur et revêtue à l'extérieur d'une couche poreuse en matière organique ou anorganique destinée à constituer la zone d'écoulement ; et en ce que :
- le récipient de déversement (16, 42) est inséré dans le corps d'appui (15) de sorte qu'il puisse être démonté de ce dernier.

15. Ensemble selon l'une quelconque des revendications 1 à 14, caractérisé en ce que :
- le récipient de déversement (16, 42) est recouvert, à l'exception d'une fente latérale (46) aménagée sur le contour de ce dernier, par un corps de répartition (47) ;
- le corps de répartition (47) est destiné à assurer l'écoulement homogène du liquide sur toute la partie de sa surface externe et est conçu de manière appropriée à cet effet ; et en ce que :
- le corps de répartition (47) présente, dans sa zone supérieure centrale, une ouverture de sortie reliée à l'ouverture d'arrivée du récipient de déversement de manière que le liquide introduit dans le récipient de déversement soit réparti, en fonction d'un rapport réglable, entre l'ouverture de sortie, d'une part, et la fente (46), d'autre part.

16. Ensemble selon l'une quelconque des revendications 1 à 15, caractérisé en ce que :
- le circuit (2) est équipé d'un point de branchement (26) auquel est raccordée la tuyauterie (28) d'alimentation ou d'évacuation du liquide ; et en ce que :
- la tuyauterie (28) est équipée d'un organe d'arrêt (27) pouvant être asservi par une unité de commande (3).

17. Ensemble selon l'une quelconque des revendications 1 à 16, caractérisé en ce que :
- le circuit (2) comprend un point de mesure de température (30) relié à l'unité de commande (3) ; et en ce que :
- un dispositif de chauffage (32) destiné à préchauffer l'eau est disposé dans le circuit (2) et relié à l'unité de commande (3).

18. Ensemble selon l'une quelconque des revendications 16 ou 17, caractérisé en ce que l'unité de commande (3) est reliée à une source de lumière et/ou à un dispositif de pulvérisation.

19. Ensemble selon l'une quelconque des revendications 16 à 18, caractérisé en ce que la pompe (22), le dispositif de préchauffage (32), le point de mesure de la température (30), l'unité de commande (3), ainsi que l'organe d'arrêt (27) sont regroupés dans une même enceinte (36).

20. Ensemble selon l'une quelconque des revendications 16 à 18, caractérisé en ce que la pompe (22), le dispositif de préchauffage (32), le point de mesure de la température (30), le réservoir de liquide et l'unité de commande (3) sont regroupés à l'intérieur du corps d'appui (15) ou de la partie supérieure (41) de l'ensemble.

21. Ensemble selon l'une quelconque des revendications 18 à 20, caractérisé en ce que le dispositif de pulvérisation est mobile de manière à pouvoir se déplacer entre une position de service où il est retiré dans l'intérieur du corps d'appui (15) ou du récipient de déversement (16, 42) et une position dans laquelle il est sorti du corps d'appui ou du récipient de déversement.
